# EUROPEAN PATENT APPLICATION

(11) **EP 4 227 833 A1**
(43) Date of publication of application: **16.08.2023**
(21) Application number: 21877719.1
(22) Date of filing: 07.10.2021
(51) Int. Cl.: G06F 21/53, G06F 9/455, G06F 9/50, G06F 21/62

(54) **SOFTWARE PROVIDING DEVICE, SOFTWARE PROVIDING METHOD, AND PROGRAM**

(30) Priority: 07.10.2020 JP 2020169809
(71) Applicant: Niigata University, Niigata-shi, Niigata 950-2181 (JP); Denka Company Limited, Tokyo 103-8338 (JP)
(72) Inventor: OKUDA, Shujiro, Niigata-shi, Niigata 951-8510 (JP); WATANABE, Yu, Niigata-shi, Niigata 951-8510 (JP); IZUTSU, Hiroshi, Tokyo 103-8338 (JP); KODAMA, Keisuke, Tokyo 103-8338 (JP)
(74) Representative: EIP
(86) International application number: PCT/JP2021/037205
(87) International publication number: WO 2022/075420

(57) **Abstract**

A software providing apparatus that provides software for performing data processing concerning an oncogene, the software operating on a virtual machine and including a software module that executes data processing concerning an oncogene and setting information for determining an operation at a time when the software module executes the data processing, the software providing apparatus comprising a receiving unit that receives an instruction concerning providing the software to an at least one predetermined user group; and a generating unit that, when the instruction has been received, instructs an information processing apparatus which stores a template of a virtual machine including the software to duplicate the template of the virtual machine, hereby causing the information processing apparatus to generate a new virtual machine including software to be provided to the at least one predetermined user group.

## Description

### Technical Field

The present invention relates to a software providing apparatus, a software providing method, and a program.

### Background Art

In the medical field, various researches have been performed by analyzing clinical information concerning patients. For example, Patent Literature 1 discloses an analysis apparatus used in a clinical trial for administering an anticancer drug to a colon cancer patient.

### Citation List

### Patent Literature

Patent Literature 1: Japanese Patent Application Laid-Open No. 2020-071517

### Summary of Invention

### Technical Problem

Currently, development of software used in performing an analysis of clinical information and the like concerning oncogenes has been advanced in facilities such as hospitals that perform researches on oncogenes. However, since clinical information and analysis contents treated by each of the facilities are different, it is undesirable in terms of security that a plurality of facilities share the same software. Therefore, there have been demands for a mechanism for, while ensuring security, providing software to facilities such as hospitals that perform researches on oncogenes.

Therefore, an object of the present invention is to provide, while ensuring security, software for performing a data analysis concerning an oncogene.

### Solution to Problem

A software providing apparatus according to an aspect of the present invention is a software providing apparatus that provides software for performing data processing concerning an oncogene, the software operating on a virtual machine and including a software module that executes data processing concerning an oncogene and setting information for determining an operation at a time when the software module executes the data processing, the software providing apparatus including: a receiving unit that receives an instruction concerning providing the software to an at least one predetermined user group; and a generating unit that, when the instruction has been received, instructs an information processing apparatus which stores a template of a virtual machine including the software to duplicate the template of the virtual machine, thereby causing the information processing apparatus to generate a new virtual machine including software to be provided to the at least one predetermined user group.

### Advantageous Effect of Invention

According to the present invention, it is possible to provide, while ensuring security, software for performing a data analysis concerning oncogenes.

### Brief Description of Drawings

[Figure 1] Figure 1 is a diagram showing an example of a software providing system according to an embodiment.
[Figure 2] Figure 2 is a diagram showing a hardware configuration example of a user terminal, an administrator terminal, and a server.
[Figure 3] Figure 3 is a diagram showing a functional block configuration example of the administrator terminal.
[Figure 4] Figure 4 is a diagram showing a functional block configuration example of the server.
[Figure 5] Figure 5 is a diagram showing an example of setting information.
[Figure 6] Figure 6 is a diagram showing an example of a screen for managing oncogene software.
[Figure 7] Figure 7 is a diagram for explaining a processing procedure at the time when the oncogene software is generated.

### Description of Embodiment

An embodiment of the present invention is explained with reference to the accompanying drawings. Note that, in the figures, components denoted by the same reference numerals and signs have the same or similar configurations.

### <System configuration>

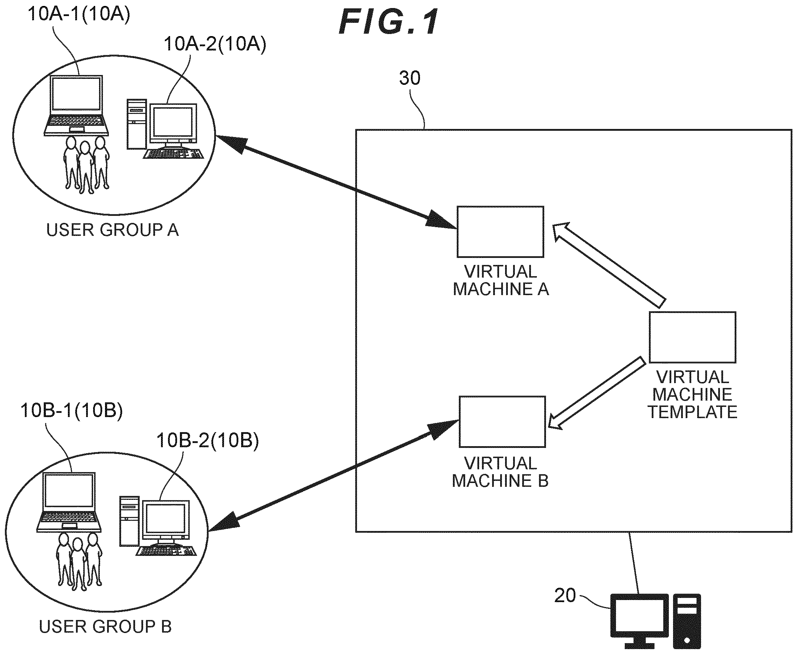

Figure 1 is a diagram showing an example of a software providing system according to this embodiment. A user terminal 10A-1 and a user terminal 10A-2 are terminals used by a user group A. A user terminal 10B-1 and a user terminal 10B-2 are terminals used by a user group B. In the following explanation, the user terminal 10A-1, the user terminal 10A-2, the user terminal 10B-1, and the user terminal 10B-2 are referred to as user terminal 10 when not being distinguished. In this embodiment, the number of user terminals 10 is not limited.

The user group A and the user group B respectively mean groups of users belonging to organizations such as hospitals or research institutes. For example, when the user group A is a hospital, users belonging to the user group A are doctors, nurses, laboratory technicians, and the like. For example, when the user group B is a research institute, users belonging to the user group B are researchers and the like. In this embodiment, the number of user groups is not limited. It is also possible to add an at least one user group other than the user group A or the user group B anew.

An administrator terminal 20 is a terminal used by an administrator or the like (hereinafter referred to as "software administrator") who manages software for performing data processing concerning an oncogene (hereinafter referred to as "oncogene software"). The software administrator operates the administrator terminal 20 to provide the oncogene software to an at least one user group.

A server 30 is configured from one or a plurality of physical information processing apparatuses and can cause one or more virtual machines to operate on a hypervisor. The server 30 may be an information processing apparatus managed by the software administrator or the like or an organization to which the software administrator belongs or may be an information processing apparatus provided by a Cloud service operated by an outsider other than the software administrator. Each of the virtual machines includes OSs (Operating Systems) and the oncogene software. That is, the oncogene software is software that can operate on the virtual machine in the server 30.

The virtual machine A is a virtual machine provided to the user group A. The virtual machine B is a virtual machine provided to the user group B. The virtual machine is called virtual machine instance as well.

A virtual machine template is data serving as the source for generating a virtual machine anew and includes an OS and the oncogene software.

The user group A uses the oncogene software operating in the virtual machine A to perform management of clinical information concerning cancer, an analysis of various data, and the like. Similarly, the user group B uses the oncogene software operating in the virtual machine B to perform management of clinical information concerning cancer, an analysis of various data, and the like.

Each of the virtual machine A and the virtual machine B operates as an independent virtual computer. Therefore, the user group A cannot access data being used by the user group B. Similarly, the user group B cannot access data being used by the user group A.

When the oncogene software is provided to an organization desiring to use the oncogene software, the software administrator copies the virtual machine template using the administrator terminal 20 to generate a new virtual machine (for example, a virtual machine C) and performs, on the generated virtual machine, setting for the new organization. By accessing the generated new virtual machine, the new organization can use the oncogene software in an environment in which security is ensured.

The user terminal 10 and the administrator terminal 20 can use any information processing apparatuses including a communication function such as a personal computer (PC), a laptop PC, a smartphone, and a tablet terminal.

### <Hardware configuration>

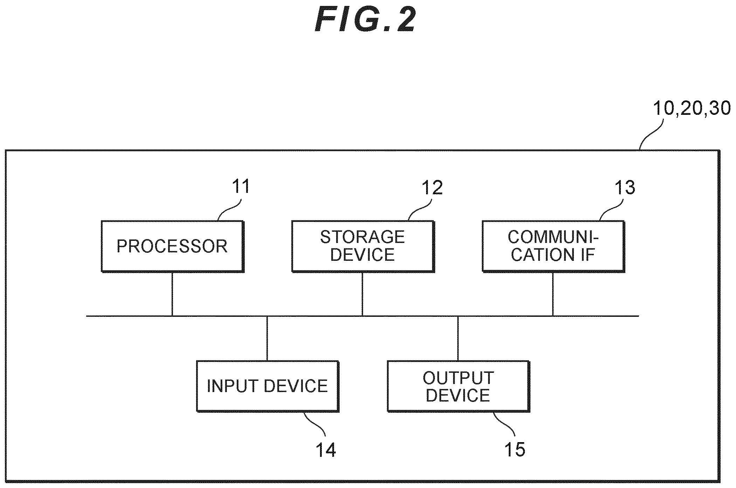

Figure 2 is a diagram showing a hardware configuration example of the user terminal 10, the administrator terminal 20, and the server 30. The user terminal 10, the administrator terminal 20, and the server 30 include a processor 11 such as a CPU (Central Processing Unit) or a GPU (Graphical processing unit), a storage device 12 such as a memory, a HDD (Hard Disk Drive) and/or an SSD (Solid State Drive), a communication IF (Interface) 13 that performs wired or wireless communication, an input device 14 that receives input operation, and an output device 15 that performs output of information. The input device 14 is, for example, a keyboard, a touch panel, a mouse, and/or a microphone. The output device 15 is, for example, a display, a touch panel, and/or a speaker.

### <Functional block configuration>

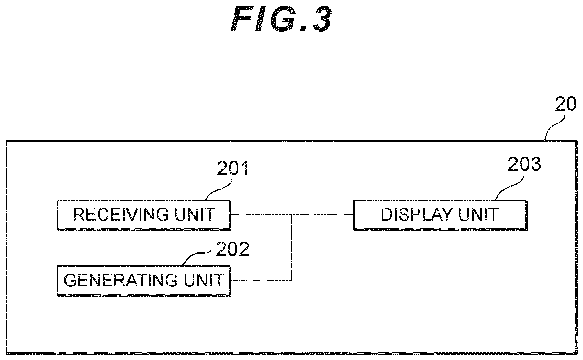

Figure 3 is a diagram showing a functional block configuration example of the administrator terminal 20. The administrator terminal 20 includes a receiving unit 201, a generating unit 202, and a display unit 203. The receiving unit 201, the generating unit 202, and the display unit 203 can be realized by execution of a program stored in the storage device 12 by the processor 11 of the administrator terminal 20. The program can be stored in a storage medium. The storage medium storing the program may be a computer-readable non-transitory storage medium (Non-transitory computer readable medium). The non-transitory storage medium is not particularly limited but may be a storage medium such as a USB memory or a CD-ROM.

The receiving unit 201 receives various instructions concerning provision of the oncogene software from the software administrator. For example, the receiving unit 201 receives an instruction concerning providing the oncogene software to an at least one predetermined user group.

When the receiving unit 201 has received an instruction to generate oncogene software anew, the generating unit 202 instructs the server 30 (the information processing apparatus) which stores a template of a virtual machine to duplicate a template of a virtual machine including the oncogene software, thereby causing the server 30 to generate a new virtual machine including software to be provided to the at least one predetermined user group.

The display unit 203 causes a display to display a screen for the software administrator to manage the oncogene software.

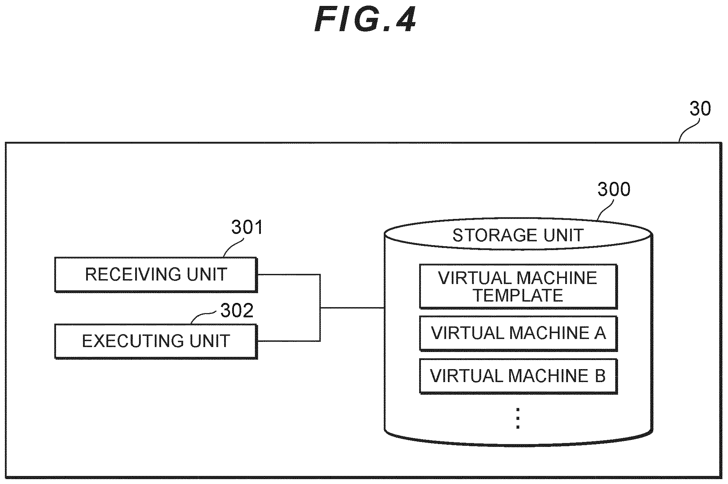

Figure 4 is a diagram showing a functional block configuration example of the server 30. The server 30 includes a storage unit 300, a receiving unit 301, and an executing unit 302. The storage unit 300 can be realized using the storage device 12 included in the server 30. The receiving unit 301 and the executing unit 302 can be realized by execution of a program stored in the storage device 12 by the processor 11 of the sever 30. The program can be stored in a storage medium. The storage medium storing the program may be a computer-readable non-transitory storage medium. The non-transitory storage medium is not particularly limited but may be a storage medium such as a USB memory or a CD-ROM.

The storage unit 300 stores a file for executing the virtual machine template and one or more virtual machines (the virtual machine A, the virtual machine B, and the like).

The receiving unit 301 receives various kinds of operation (a virtual machine duplication instruction and the like) from an external information processing apparatus (for example, the administrator terminal 20).

The executing unit 302 causes the virtual machines stored in the storage unit 300 to operate on a hypervisor. The executing unit 302 performs processing such as virtual machine creation, virtual machine start, and virtual machine duplication.

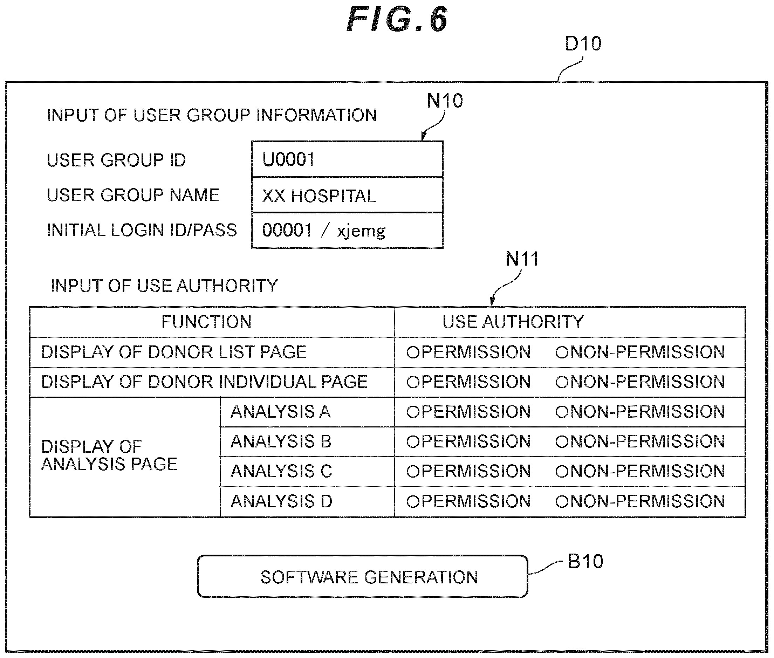

Note that each of the functional blocks included in the administrator terminal 20 may be implemented not in the administrator terminal 20 but in the server 30. The administrator terminal 20 may be a general terminal including a Web browser. In that case, the server 30 may include a Web server function and cause the Web browser included in the administrator terminal 20 to display a screen (Figure 6 and the like referred to below) concerning, for example, operation of a virtual machine according to this embodiment.

### <Processing content>

Subsequently, processing content performed by the software providing system according to this embodiment is specifically explained.

The oncogene software includes a data processing module (a software module) that executes data processing concerning an oncogene and setting information (for example, executability setting for various kinds of processing) for determining an operation wherein the data processing module executes data processing concerning cancer management. The oncogene software may further include a database that stores various data treated by the data processing module (for example, a database that stores clinical information).

The data processing concerning an oncogene performed by the data processing module includes a plurality of kinds of data processing concerning the oncogenes. Examples of the data processing include processing for managing a donor (a cancer patient), processing for managing clinical information concerning an oncogene obtained from the donor, and processing for analyzing the clinical information concerning the oncogenes.

Examples of the processing for managing the donor (the cancer patient) include processing for displaying a donor list page and processing for displaying a donor individual page. In the donor list page, it is possible to perform search, filtering, and the like of a donor based on a type of cancer and clinical information obtained from the donor. In the donor individual page, it is possible to perform operations for, for example, displaying a list of mutations of oncogenes, displaying to which clusters respective donors belong as a result of clustering the variations of the oncogenes, displaying, on a Pathway map, varied oncogenes in the respective donors, and displaying, registering, editing, and deleting clinical information.

Examples of the processing for managing the clinical information provided from the donor include processing for importing/exporting the clinical information. Examples of the processing for analyzing the clinical information concerning the oncogenes include a Mutation burden analysis, an Alteration frequency analysis, a DNA substitution type analysis, an Oncoprint analysis, a Pathway analysis, a Gene map analysis, a Mutation signature analysis, a Survival plot analysis, and a Crosstable test analysis. These kinds of analysis processing are not limited to be performed targeting the clinical information of the respective donors. It is also possible to select any donor group and perform these kinds of analysis processing on clinical information of the selected donor group.

The setting information includes, in addition to information concerning the at least one user group that use the oncogene software, information for setting, for each of the at least one user group, executability for each of the kinds of data processing concerning an oncogene. The data processing module reads out the setting information at a start time to determine executability of each of the kinds of data processing. That is, the data processing module operates, for the plurality of kinds of data processing, to execute data processing, execution of which has been permitted by the setting information, or not to execute data processing, execution of which has not been permitted by the setting information.

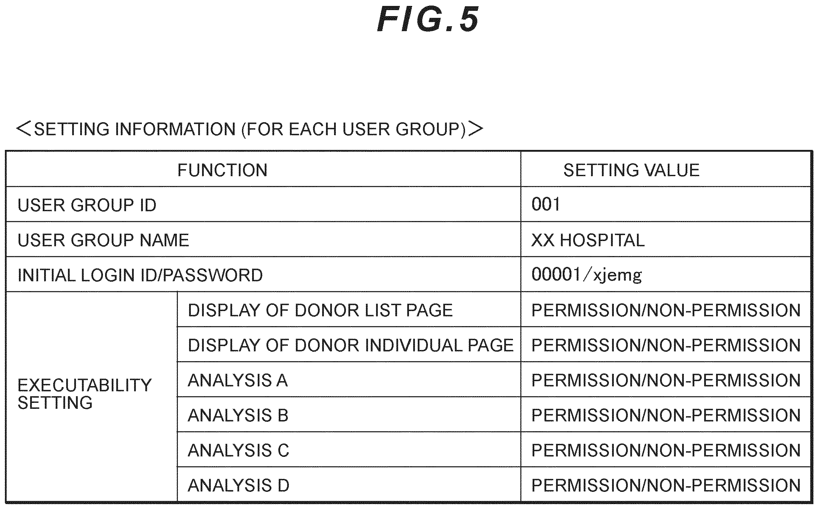

Figure 5 is a diagram showing an example of the setting information. In "user group ID", an ID for identifying a user group that uses the oncogene software is stored. In "user group name", a name of the user group that uses the oncogene software is stored. In "login ID/password", initial values of an ID and a password for logging in to the oncogene software are set. In "executability setting", executability for each of the kinds of data processing concerning an oncogene is stored.

Figure 6 is a diagram showing an example of a screen for managing the oncogene software. When the oncogene software is provided to a new user group desiring to use the oncogene software, the software administrator generates the oncogene software using a screen displayed on the administrator terminal 20.

An input area N10 is an area for inputting an ID and a name of a user group that uses the oncogene software and an initial login ID and password for logging in to the oncogene software. An input area N11 is an area for setting executability for each of the kinds of data processing concerning an oncogene. The executability is determined by, for example, content of a license agreement between the software administrator and the user group.

When the software administrator has pressed a button B10, the oncogene software to be provided to the at least one user group is generated.

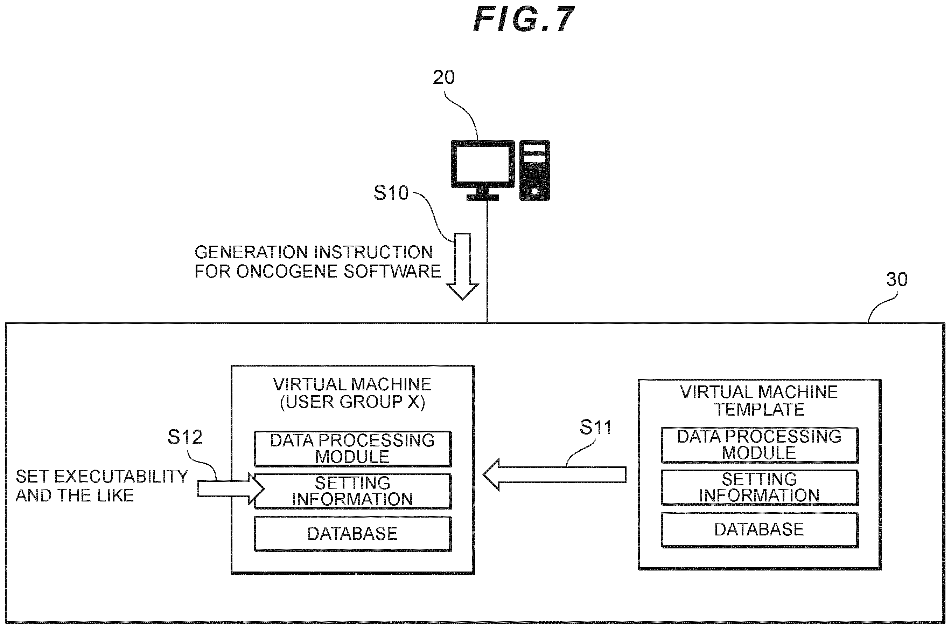

Figure 7 is a diagram for explaining a processing procedure at the time when the oncogene software is generated. For example, the button B10 is pressed on the screen shown in Figure 6, whereby the processing procedure shown in Figure 7 is executed.

In step S10, the receiving unit 201 of the administrator terminal 20 receives, from the software administrator, via the screen shown in Figure 6, an instruction concerning providing the oncogene software to a user group X (an at least one predetermined user group). The instruction includes information (a name, a login ID, and the like) concerning the user group X and an instruction to permit or not permit the user group X to execute each of a plurality of kinds of data processing concerning oncogenes. When the button B10 has been pressed on the screen shown in Figure 6, processing proceeds to a processing procedure in step S11.

In step S11, the generating unit 202 instructs the server 30 about duplication of the virtual machine template. When the instruction has been received, the executing unit 302 of the server 30 duplicates the virtual machine template including the oncogene software to generate a new virtual machine to be used by the user group X. The virtual machine template includes, in addition to setting data (a CPU type, a memory size, a disk size, communication speed, and the like) of the virtual machine, an OS and the oncogene software (the data processing module, the setting information, and the database). Note that dummy data may be stored in the setting information. The database may be an empty database in which no record is stored. Since the generated new virtual machine is a duplication of the virtual machine template, the new virtual machine includes, similarly to the virtual machine temperate, an OS and the oncogene software (the data processing module, the setting information, and the database).

In step S12, the generating unit 202 of the administrator terminal 20 sets, in the setting information included in the new virtual machine to be provided to the user group X, the new virtual machine having been generated by duplicating the virtual machine template, the executability for each of the plurality of kinds of data processing concerning an oncogene for the user group X, the executability having been instructed from the software administrator in the processing procedure in step S10. Before executing the new virtual machine, the generating unit 202 may directly operate a file configuring the new virtual machine to rewrite the setting information. Alternatively, the generating unit 202 may start the new virtual machine, log in to the OS started on the new virtual machine, and, then, rewrite the setting information stored in a disk of the virtual machine.

When the processing procedure in step S12 is completed, the software administrator informs the initial login ID and the initial password set in the setting information to the user group X. A user belonging to the user group X can use the oncogene software by accessing the virtual machine created anew using the user terminal 10.

### <Summary>

According to the embodiment explained above, the virtual machine template prepared in advance is duplicated to provide the oncogene software to a new user. Since virtual machines generated by duplicating the virtual machine template respectively operate as different computers, the virtual machines cannot communicate with one another and cannot refer to data on the other virtual machines. Therefore, according to this embodiment, it is possible to provide, while ensuring security, software for performing a data analysis concerning cancer.

The embodiment explained above is for facilitating understanding of the present invention and is not for limitedly interpretating the present invention. The flowcharts, the sequences, the elements included in the embodiment, and the like explained in the embodiment are not limited to the illustrated ones and can be changed as appropriate.

### Reference Sings List

- 10: User terminal
- 11: Processor
- 12: Storage device
- 13: Communication IF
- 14: Input device
- 15: Output device
- 20: Administrator terminal
- 30: Server
- 201: Receiving unit
- 202: Generating unit
- 203: Display unit
- 300: Storage unit
- 301: Receiving unit
- 302: Executing unit

## Claims

1. A software providing apparatus that provides software for performing data processing concerning an oncogene,
the software operating on a virtual machine and including a software module that executes data processing concerning an oncogene and setting information for determining an operation at a time when the software module executes the data processing,
the software providing apparatus comprising:
a receiving unit that receives an instruction concerning providing the software to an at least one predetermined user group; and
a generating unit that, when the instruction has been received, instructs an information processing apparatus which stores a template of a virtual machine including the software to duplicate the template of the virtual machine, hereby causing the information processing apparatus to generate a new virtual machine including software to be provided to the at least one predetermined user group.

2. The software providing apparatus according to claim 1, wherein
the data processing includes a plurality of kinds of data processing,
the setting information includes information for setting, for each of at least one user group, executability for each of the plurality of kinds of data processing, and
the software module operates, for the plurality of kinds of data processing, to execute data processing, execution of which has been permitted by the setting information, and not to execute data processing, execution of which has not been permitted by the setting information.

3. The software providing apparatus according to claim 2, wherein
the instruction received by the receiving unit includes an instruction of whether the execution of each of the plurality of kinds of data processing is permitted or not for the at least one predetermined user group, and
the generating unit sets, in the setting information included in the new virtual machine, the instructed executability of each of the plurality of kinds of data processing for the at least one predetermined user group.

4. The software providing apparatus according to any one of claims 1 to 3, wherein the data processing includes processing for analyzing clinical information concerning an oncogene.

5. A software providing method executed by a software providing apparatus that provides software for performing data processing concerning an oncogene,
the software operating on a virtual machine and including a software module that executes data processing concerning an oncogene and setting information for determining an operation at a time when the software module executes the data processing,
the software providing method comprising:
a step of receiving an instruction concerning providing the software to an at least one predetermined user group; and
a step of, when the instruction has been received, instructing an information processing apparatus which stores a template of a virtual machine including the software to duplicate the template of the virtual machine, thereby causing the information processing apparatus to generate a new virtual machine including software to be provided to the at least one predetermined user group.

6. A program to be executed by a computer that provides software for performing data processing concerning an oncogene,
the software operating on a virtual machine and including a software module that executes data processing concerning an oncogene and setting information for determining an operation at a time when the software module executes the data processing,
the program causing the computer to execute:
a step of receiving an instruction concerning providing the software to an at least one predetermined user group; and
a step of, when the instruction has been received, instructing an information processing apparatus which stores a template of a virtual machine including the software to duplicate of the template of the virtual machine, hereby causing the information processing apparatus to generate a new virtual machine including software to be provided to the at least one predetermined user group.
